(19) Europäisches Patentamt
European Patent Office
Office européen des brevets

(11) **EP 1 538 891 B1**

(12) **EUROPEAN PATENT SPECIFICATION**

(45) Date of publication and mention
of the grant of the patent:
**29.03.2006 Bulletin 2006/13**

(51) Int Cl.:
***A01G 7/00*** (2006.01)

(21) Application number: **03748790.7**

(86) International application number:
**PCT/NL2003/000652**

(22) Date of filing: **16.09.2003**

(87) International publication number:
**WO 2004/026022 (01.04.2004 Gazette 2004/14)**

(54) **A METHOD AND A DEVICE FOR DETERMINING THE QUALITY OF PLANT MATERIAL AND A METHOD AND A DEVICE FOR SORTING PLANT MATERIAL**

VERFAHREN UND VORRICHTUNG ZUR QUALITÄTSBESTIMMUNG VON PFLANZENMATERIAL SOWIE VERFAHREN UND VORRICHTUNG ZUM SORTIEREN VON PFLANZENMATERIAL

PROCEDE ET DISPOSITIF PERMETTANT DE DETERMINER LA QUALITE D'UNE MATIERE VEGETALE ET PROCEDE ET DISPOSITIF PERMETTANT DE CLASSER UNE MATIERE VEGETALE

(84) Designated Contracting States:
**AT BE BG CH CY CZ DE DK EE ES FI FR GB GR HU IE IT LI LU MC NL PT RO SE SI SK TR**

(30) Priority: **17.09.2002 NL 1021476**

(43) Date of publication of application:
**15.06.2005 Bulletin 2005/24**

(73) Proprietor: **Plant Research International B.V.**
**6708 PB Wageningen (NL)**

(72) Inventors:
• **JALINK, Hendrik,**
**p/a Plant Research Int. B.V.**
**6708 PB Wageningen (NL)**
• **VAN DER SCHOOR, Rob,**
**p/a Plant Research Int. B.V.**
**6708 PB Wageningen (NL)**
• **SCHAPENDONK, Adrianus Henricus Cornelis Maria**
**6708 PB Wageningen (NL)**

(74) Representative: **Bras, Pieter**
**Octrooibureau Vriesendorp & Gaade**
**P.O. Box 266**
**2501 AW Den Haag (NL)**

(56) References cited:
**WO-A-99/56127**     **DE-A- 19 950 396**
**DE-C- 10 002 880**

• **DATABASE WPI Section PQ, Week 198608 Derwent Publications Ltd., London, GB; Class P13, AN 1986-054629 XP002242964 & SU 1 172 486 A (AS UKR PLANT PHYSIO) 15 August 1985 (1985-08-15)**

**Description**

The present invention relates to a method and a device for determining the quality of plant material, such as for instance leaf material, fruits, berries, flowers, flower organs, roots, seeds, bulbs and tubers of plants, by determining a characteristic parameter of the photosynthetic system of the plant material, according to the main claims 1 and 7 respectively. The present invention furthermore relates to a method and a device for sorting plant material, according to the main claims 9 and 12 respectively.

**Prior Art**

At present the determination of quality of plants takes place by scoring on external characteristics. This method depends on the person who observes, is time-consuming, is not automated and damage to plants is noted at too late a stage. There is a great need to measure the quality of plants fast, in a non-destructive manner and at an as early as possible stage.

Another known method used for determining the quality of plants is the measuring of the photosynthetic activity by means of U. Schreiber's pulse amplitude modulation (PAM) fluorometer, described in "Detection of rapid induction kinetics with a new type of high frequency modulated chlorophyll fluorometer" Photosynthesis Research (1986) 9: 261-272. In this method the efficiency of the photosynthetic activity is determined. To that end the fluorescence yield, F0, is first measured in the dark or at a low light intensity of the ambient light. Then the maximum fluorescence yield, Fm, is determined at a saturated light pulse. From the two measuring signals the efficiency of the photosynthetic system can be calculated according to $Q=(Fm-F0)/Fm$. This method has a number of important disadvantages. The measurement of F0 depends on the intensity of the ambient light, which often is not constant during the measurement. The measuring method is also sensitive to the ambient temperature, relative air humidity and gas composition. All these factors influence the measurement. For using this known measuring method for determining the quality, the correction factors for all individual different types of plant material would have to be determined. The known method is based on measuring the regulation of the photosynthesis, but as a "stand-alone" technique to measure stress in plants it is insufficiently selective. In addition there are a number of logistic problems: a proper analysis takes at least 10 minutes and in order to obtain a reliable measurement, measuring should take place at at least five positions of the plant. An important requirement for a proper measurement is furthermore the full reduction of photosystem 2 with a saturated light pulse. In real life conditions this requirement often is not met, because the plants are too big or because it is unknown at what intensity light saturation occurs.

**Summary of the invention**

It is an object of the present invention to provide a method for fast, non-destructive measuring of plant quality which does not have the above-mentioned disadvantages.

According to the invention this object is achieved by determining a characteristic parameter of the photosynthetic system of the plant material, the energy transfer, $ET_{ba}$ from chlorophyll-b to chlorophyll-a, using a spectroscopic technique.

Accordingly, the present invention provides a method for determining the quality of plant material by determining a characteristic parameter of the photosynthetic system of the plant material, characterized in that said characteristic parameter is a parameter containing information about the energy transfer from chlorophyll-b to chlorophyll-a and in that the method comprises the following steps:

a) irradiating the plant material with electromagnetic radiation having such a wavelength that at least a part of the chlorophyll-b present is excited and measuring the fluorescence radiation originating from the plant material, which fluorescence radiation is associated with the chlorophyll-a transition, for obtaining a fluorescence signal CF-b.
b) irradiating the plant material with electromagnetic radiation having such a wavelength that at least a part of the chlorophyll-a present is excited and measuring the fluorescence radiation originating from the plant material, which fluorescence radiation is associated with the chlorophyll-a transition, for obtaining a fluorescence signal CF-a.
c) calculating the characteristic parameter from CF-b and CF-a.

The present invention further relates to a device for determining the quality of plant material using the method described above, comprising first means for irradiating the plant material with electromagnetic radiation having such a wavelength that at least a part of the chlorophyll-b present in the plant material is excited, first means for measuring the fluorescence radiation originating from the plant material for obtaining a fluorescence signal (CF-b) that is associated with the chlorophyll-a transition as a result of the absorption of the radiation by chlorophyll-b, second means for irradiating the plant material with electromagnetic radiation having such a wavelength that at least a part of the chlorophyll-a present in the plant material is excited, second means for measuring the fluorescence radiation originating from the plant material for obtaining a fluorescence signal (CF-a) that is associated with the chlorophyll-a transition as a result of the absorption of the radiation by chlorophyll-a and means for processing the fluorescence signals.

**Short description of the figures**

Figure 1 schematically shows a device for determining the quality of plant material according to the invention.

Figure 2 shows the effect of a herbicide on the energy transfer from chlorophyll-b to chlorophyll-a, expressed as $ET_{ba}$= CF-b/CF-a measured with a device according to figure 1 with regard to black nightshade.

**Detailed description**

The present invention is based on a spectroscopic measurement which is highly specific to the chlorophyll-a and chlorophyll-b present. Reaction centre chlorophyll contains a large amount of chlorophyll-a and antenna chlorophyll contains a large amount of chlorophyll-b. When there is little light, the plant profits from a large quantity of antenna chlorophyll. When there is a large amount of light, the plant on the other hand benefits from a rapid processing of the energy offered (a large amount of reaction centre chlorophyll) and a lower absorption (little antenna chlorophyll). The transfer of energy from antenna chlorophyll to reaction centre chlorophyll therefore is crucial to the survival strategy of plants, which changes along with the growing conditions and the degree of stress. Under stress the need for energy of the tissue decreases and consequently the demands made on the two chlorophyll fractions change. The method according to the invention allows determining the quality of plant material directly and with very high speed and sensitivity. In the literature no information is available about the measuring of the $ET_{ba}$ value as described in this invention and its use for the determination of the quality of plant material.

In the method according to the invention the plant material is irradiated with electromagnetic radiation having such a wavelength that at least a part of the chlorophyll-b present is excited, for instance with electromagnetic radiation having a wavelength of between 400 and 670 nm such as laser light having a wavelength of approximately 635 nm. So, chlorophyll-b is excited. A part of the energy of the excited chlorophyll-b is transferred to chlorophyll-a. Chlorophyll-a shows fluorescence, chlorophyll-b on the other hand hardly does. The fluorescence of the chlorophyll-a-transition (CF-b) is measured between 600 and 800 nm, for instance around 730 nm. The plant material is additionally irradiated with electromagnetic radiation having such a wavelength that at least a part of the chlorophyll-a present is excited, for instance electromagnetic radiation having a wavelength of between 350 and 700 nm such as laser light having a wavelength of approximately 670 nm. So, the chlorophyll-a is excited. The fluorescence of the chlorophyll-a-transition (CF-a) is also measured here between 600 and 800 nm, for instance at 730 nm. From the data the $ET_{ba}$ value is calculated according to:

$$ET_{ba} = CF\text{-}b/CF\text{-}a \quad (1)$$

For irradiating the plant material use can be made of any suitable light source, for instance a laser, a light bulb having suitable filters or a LED. The fluorescence radiation originating from the plant material can be measured with any suitable detector, for instance a CCD-camera, one or more photodiodes or a photomultiplier.

Determining $ET_{ba}$ according to formula (1) can be carried out very fast by simultaneously and at the same spot irradiating the plant material with a laser-a exciting chlorophyll-a and a laser-b exciting chlorophyll-b. The intensity of the laser power of laser-a is modulated with a frequency $f_a$ and the intensity of the laser power of laser-b is modulated with a different frequency, $f_b$. The fluorescence signal is measured by one single photodiode. Said photodiode is connected to two amplifiers, so-called lock-in amplifiers. The one amplifier-a measures the modulated signal that results from the excitation of chlorophyll-a by laser-a, because this amplifier only measures signals having modulation frequency $f_a$. Signals having other frequencies are suppressed. For amplifier-b applies that it only measures the modulated signal that results from the excitation of chlorophyll-b by laser-b. In this way the fluorescence signals originating from a spot of plant material that is simultaneously irradiated by two different lasers and which are measured by the same photodiode, are separated from each other.

By selecting the intensity of the light sources such that the photosynthetic system is saturated it can be ensured that possible changes of the power of the light sources do not affect the measurement. There is no danger of over-saturation. It has appeared that the CF-a value does not depend on the fact of whether or not the light source used for excitation of chlorophyll-b is activated, whereas the CF-b value is not affected either by the simultaneous excitation of chlorophyll-a. It is therefore possible to carry out the measurement of the chlorophyll-a and chlorophyll-b simultaneously. The power of the light sources for exciting chlorophyll-a and chlorophyll-b have to be equal as much as possible and irradiate the same spot on the plant material. Because the ratio CF-b/CF-a is determined, the measurement does not depend on the size of the irradiated spot.

The method according to the invention is highly sensitive, fully non-destructive and very fast. These are qualities that allow making a sorting device which enables to select plant material on the basis of the $ET_{ba}$ value. Because the $ET_{ba}$ value has a direct relation to the quality of plant material, sorting on quality is possible.

Accordingly, the invention also relates to a method for separating plant material consisting of separate components in several fractions each having a different quality, wherein the characteristic parameter is determined for each component using a method or a device for determining the quality of plant material according to the invention, and the fractions of components having the characteristic parameter in the same pre-determined range are collected.

The invention further relates to a device for separating plant material using the above-mentioned method, comprising a supply part for the plant material, a part for the irradiation of the plant material with electromagnetic radiation, a part for the measuring of the fluorescence radiation originating from the plant material for obtaining a fluorescence signal, and a separation part that operates on the basis of the signal measured.

The material to be sorted may consist of leaf material, fruits such as berries, flowers, flower organs, roots, seeds, bulbs and tubers of plants etcetera. The fractions into which the plant material is separated may each consist of separate fruits, berries, flowers, flower organs, roots, seeds, bulbs and tubers of plants etcetera.

The method for separating plant material according to the present invention can be used for refined purposes, such as early selection of seedlings on stress tolerance, programmed administering of herbicides and quality control in greenhouse culture.

The method for determining the quality of plant material according to the invention can be used in the screening of the plant quality in the seedling stage at the grower's. Trays of seedlings can be tested. Seedlings of a low quality can be removed in an automated manner by robotisation and be replaced by good seedlings.

This method for determining the quality of plant material according to the invention can also be used for selection of seedlings on stress sensitivity by subjecting trays of seedlings to infectious pressure or to abiotic stress factors and online registration of the signal build-up. In this connection the specific demands that are made on the quality of seedlings by biological farming, are interesting.

At an auction plants can be checked on quality. A fast, non-destructive and objective method for determining the pot plant quality and the vase quality of the flowers supplied at the auction or even during cultivation is of great economic importance. The flower quality depends on the age, cultivation and possible post-harvest treatment.

The method for determining the quality of plant material according to the invention can also be used in high-throughput-screening of model crops (Arabidopsis and rice) for functional genomics research for the purpose of function analysis and trait identification.

Another important use of the present invention is the determination of freshness of vegetables and ripeness of fruits. The colour of apples for instance is not a good measure for determining the ripeness. An apple may show large differences in colour. The bloom of an apple may for instance be red, whereas the colour on the other side of the apple may be yellow. In an $ET_{ba}$ measurement according to the invention not the colour pigments that predominantly determine the red and yellow colours are measured, but the energy transfer from chlorophyll-b to chlorophyll-a which is less sensitive to this and gives a little dispersion when measuring the $ET_{ba}$ around the apple. Another example of a use of the invention is the determination of the correct picking moment of fruit, such as tomatoes and bananas. Too early a moment of picking a tomato does not result in a good ripening. The measurement of $ET_{ba}$ may be a good measure for determining the correct moment of picking. During the ripening process the efficiency of the photosynthetic process decreases in time and as result so does the $ET_{ba}$ value. A change in the $ET_{ba}$ with respect to the values that apply to tomatoes in which the ripening process has not started yet, indicates that the ripening processes have started. In general, tests will have to establish on what $ET_{ba}$ value sorting is possible. In a test the $ET_{ba}$ value is determined of the picked tomatoes in various stages of ripeness and they are divided into different classes. Then during the ripening in climate chambers it is observed what classes yield tomatoes of high quality. The threshold value found in this test is used as value for $ET_{ba}$ to select on.

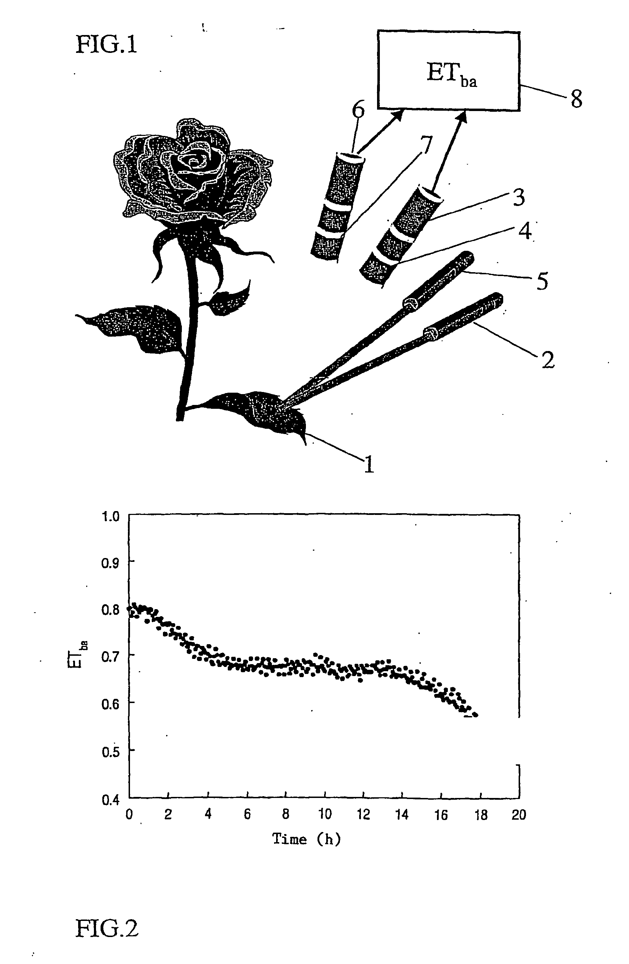

A preferred embodiment of a device for determining the quality of plant material according to the invention is shown in figure 1. This is a simple embodiment that the device may have. A part of the leaf (1) of a plant is irradiated by the first light source (2) having a preferred wavelength of 635 nm to excitate chlorophyll-b molecules. The intensity is modulated with a frequency $f_b$. At least a part of the chlorophyll-b molecules gets into an electronically excited state. At least a part of the excited chlorophyll-b molecules transmits energy to chlorophyll-a molecules. At least a part of the chlorophyll-a molecules falls back to the ground state under emitting fluorescence. A part of the chlorophyll fluorescence is measured by a detector (3) provided with an optical filter (4), suitable to let through only light between 700 and 800 nm. This signal (CF-b) is measured by lock-in amplifier lock-in-b (6), which only measures signals modulated with a frequency $f_b$. The same part of the leaf (1) is irradiated by a second light source (5) having a preferred wavelength of 670 nm to excitate chlorophyll-a molecules. The intensity is modulated with a frequency $f_a$ which is different from $f_b$. At least a part of the chlorophyll-a molecules gets into an electronically excited state. At least a part of the excited chlorophyll-a molecules falls back to the ground state under emitting fluorescence. A part of the chlorophyll fluorescence is also measured with detector (3). The fluorescence signal as a result of the irradiation with laser-a (CF-a) is measured by amplifier lock-in-a (7) which only measures signals modulated with a frequency $f_a$. The $ET_{ba}$ value is calculated by the computer (8) from the quotient of CF-b and CF-a with formula 1.

The device for determining the quality of plant material according to the invention can be built in in known sorting devices.

A device for separating plant material according to the invention may consist of a conveyor belt supplying the plant material to the measuring part where the $ET_{ba}$ measurement according to the invention takes place after which the material is further transported to the separation part where the fractions of which the $ET_{ba}$ values are not within predetermined limits, are removed from the conveyor belt in a manner known per se, for instance with an air flow. The air flow can be controlled by a valve operated by an electronic circuit such as a microprocessor processing the signal of the measuring part. The plant material may also be separated into various classes of quality wherein for each class of quality the $ET_{ba}$ value of the plant material is within predetermined limits. The limits may be determined by for instance determining the $ET_{ba}$ value of samples of plant material having the desired quality or properties. The expert in this field will know that the plant material to be separated can also be transported through the measuring part and separation part in another way than by means of a conveyor belt and that there are various methods available to sort the various fractions from the main flow, such as an air flow, a liquid pulse or mechanic valve. The plant material can also be present in a liquid. Sorting in a liquid may for instance take place in order to minimise the risk of damaging very delicate plant material, such as apples and other soft fruit.

Example 1

This example describes the effect of a herbicide on the energy transfer from chlorophyll-b to chlorophyll-a calculated as $ET_{ba}=CF\text{-}b/CF\text{-}a$. CF-b and CF-a are measured with the above-mentioned preferred embodiment having two modulated lasers according to figure 1. Figure 2 shows the course in time of $ET_{ba}=CF\text{-}b/CF\text{-}a$. At point in time t=0 1 $\mu$l of a herbicide solution is applied on approximately 1 cm of the measuring spot on a leaf of black nightshade. The starting value of $ET_{ba}$ is approximately 0.80. After about 1 hour the $ET_{ba}$ value decreases and has a constant value of 0.68 from 5 hours to approximately 14 hours. As from 14 hours the $ET_{ba}$ value again decreases further and after 20 hours has a value of approximately 0.49. After 20 hours there was no visible damage to the leaf at the spot where the measurement took place. This measurement shows that the $ET_{ba}$ value at point in time t=0 and point in time t=20 has decreased by 38%. This $ET_{ba}$ measurement shows that a change in $ET_{ba}$ value is a measure for herbicide stress. It is now possible to adjust the dose of herbicide to the $ET_{ba}$ value measured. Prior to spraying the $ET_{ba}$ value is measured. Then the weed is sprayed with a herbicide formulation. From previous tests it is known after how many hours after spraying the $ET_{ba}$ value has to be measured. From the example it appears that after 20 hours the $ET_{ba}$ value has decreased dramatically. From tests it is known that at an $ET_{ba}$ value below a certain threshold value the plants die. In this way the user knows that he has sprayed sufficient herbicide. An advantage of this method is that measuring can take place in the field at high light intensities. The commonly used method based on U. Schreiber's pulse amplitude modulation (PAM) fluorometer cannot be used in full daylight.

Example 2

It is known that the leaves of a tobacco plant show ageing characteristics from the bottom up. This is visualised by the leaves becoming yellow. With the device as shown in figure 1 the $ET_{ba}$ has been measured for each leaf. The leaves have been numbered from the bottom up. From table 1 a clear trend can be seen in the ageing of the leaf. It appears that younger leaves have a lower value for $ET_{ba}$ than the full-grown leaves (leaf nr. 9). The $ET_{ba}$ value is a measure for the stage of development of leaves during the growth of the plant. The $ET_{ba}$ value is also a measure for the yellowing or the ageing of the leaves. This latter application is particularly interesting for determining the freshness of plant material (vegetables) and ripening of fruit.

Table 1

$ET_{ba}$ measurements on leaves of a tobacco plant. The leaf number here indicates the order of the leaf from the bottom up.

| Leaf nr | 1 | 2 | 3 | 4 | 5 | 8 | 7 | 8 | 9 | 10 | 11 | 12 |
|---|---|---|---|---|---|---|---|---|---|---|---|---|
| $ET_{ba}$ | 0.23 | 0.20 | 0.24 | 0.53 | 0.66 | 0.79 | 0.86 | 0.92 | 0.97 | 0.91 | 0.82 | 0.74 |

**Claims**

1. A method for determining the quality of plant material by determining a characteristic parameter of the photosynthetic system of the plant material, **characterized in that** said characteristic parameter is a parameter containing information about the energy transfer from chlorophyll-b to chlorophyll-a and **in that** the method comprises the following steps:

    a) irradiating the plant material with electromagnetic radiation having such a wavelength that at least a part of the chlorophyll-b present is excited and measuring the fluorescence radiation originating from the plant material, which fluorescence radiation is associated with the chlorophyll-a transition, for obtaining a fluorescence signal CF-b.
    b) irradiating the plant material with electromagnetic radiation having such a wavelength that at least a part of the chlorophyll-a present is excited and measuring the fluorescence radiation originating from the plant material, which fluorescence radiation is associated with the chlorophyll-a transition, for obtaining a fluorescence signal CF-a.
    c) calculating the characteristic parameter from CF-b and CF-a.

2. A method according to claim 1, the parameter containing information about the energy transfer from chlorophyll-b to chlorophyll-a, $ET_{ba}$, being calculated with the formula

$$ET_{ba} = CF\text{-}b/CF\text{-}a$$

3. A method according to any one of the preceding claims, wherein the electromagnetic radiation used for irradiating the plant material has a wavelength of between 400 and 670 nm for chlorophyll-b and between 350 and 700 nm for chlorophyll-a.

4. A method according to any one of the preceding claims, the fluorescence signal originating from the plant material being measured between 600 and 800 nm.

5. A method according to any one of the preceding claims, the electromagnetic radiation with which the plant material is irradiated, being generated by a lamp, laser of LED-lamp.

6. A method according to any one of the preceding claims, the fluorescence radiation originating from the plant material being measured with a photodiode, photomultiplier or electronic camera.

7. A device for determining the quality of plant material using the method according to any one of the claims 1-6, comprising first means for irradiating the plant material with electromagnetic radiation having such a wavelength that at least a part of the chlorophyll-b present in the plant material is excited, first means for measuring the fluorescence radiation originating from the plant material for obtaining a fluorescence signal (CF-b) that is associated with the chlorophyll-a transition as a result of the absorption of the radiation by chlorophyll-b, second means for irradiating the plant material with electromagnetic radiation having such a wavelength that at least a part of the chlorophyll-a present in the plant material is excited, second means for measuring the fluorescence radiation originating from the plant material for obtaining a fluorescence signal (CF-a) that is associated with the chlorophyll-a transition as a result of the absorption of the radiation by chlorophyll-a and means for processing the fluorescence signals.

8. A device according to claim 7, the first and second means for irradiating the plant material consisting of respectively a first laser of which the intensity has been modulated with a first frequency and a second laser of which the intensity has been modulated with a second frequency that is different from the first frequency, the first and second means for measuring the fluorescence signals consisting of one detector connected to a first lock-in amplifier that only measures fluorescence signals that are modulated with the first frequency and to a second lock-in amplifier that only measures fluorescence signals that are modulated with the second frequency, and the means for processing the fluorescence signals consisting of a computer provided with software for processing the signals of the first and second lock-in amplifier.

9. A method for separating plant material consisting of separate components in several fractions each having a different quality, wherein the characteristic parameter is determined for each component using the method according to any one of the claims 1-6 or the device according to claim 7 or 8 and the fractions of components having the characteristic parameter in the same pre-determined range are collected.

10. A method according to claim 9, the plant material consisting of leaf material, fruits, berries, flowers, flower organs, roots, seeds, bulbs and tubers of plants.

11. A method according to claim 10, each separate component consisting of separate fruits, berries, flowers, flower organs, roots, seeds, bulbs and tubers of plants.

12. A device for separating plant material using the method according to any one of the claims 9-11, comprising a supply part for the plant material, a part for the irradiation of the plant material with electromagnetic radiation, a part for the measuring of the fluorescence radiation originating from the plant material for obtaining a fluorescence signal, and a separation part that works on the basis of the signal measured.

**Patentansprüche**

1. Verfahren zur Bestimmung der Qualität von Pflanzenmaterial durch Bestimmung eines charakteristischen Parameters des Photosynthesesystems des Pflanzenmaterials, **dadurch gekennzeichnet, daß** der charakteristische Parameter einen, Information über die Energieübertragung von Chlorophyll-b zu Chlorophyll-a enthaltenden, Parameter ist und daß das Verfahren die nachfolgenden Schritte umfaßt:

   a) das Bestrahlen des Pflanzenmaterials mit elektromagnetischer Strahlung mit einer derartigen Wellenlänge daß zumindest ein Teil vom vorhandenen Chlorophyll-b angeregt wird und das Messen der aus dem Pflanzenmaterial stammenden Fluoreszenzstrahlung, welche Fluoreszenzstrahlung mit dem Chlorophyll-a-Übergang verbunden ist, zum Erhalten eines Fluoreszenzsignals CF-b.
   b) das Bestrahlen des Pflanzenmaterials mit elektromagnetischer Strahlung mit einer derartigen Wellenlänge daß zumindest ein Teil vom vorhandenen Chlorophyll-a angeregt wird und das Messen der aus dem Pflanzenmaterial stammenden Fluoreszenzstrahlung, welche Fluoreszenzstrahlung mit dem Chlorophyll-a-Übergang verbunden ist, zum Erhalten eines Fluoreszenzsignals CF-a.
   c) das Berechnen des charakteristischen Parameters aus CF-b und CF-a.

2. Verfahren nach Anspruch 1, wobei der, Information über die Energieübertragung von Chlorophyll-b zu Chlorophyll-a, enthaltende Parameter, $ET_{ba}$, berechntet wird mit der Formel

$$ET_{ba} = CF\text{-}b/CF\text{-}a$$

3. Verfahren nach einem der vorhergehenden Ansprüche, wobei die für das Bestrahlen des Pflanzenmaterials benutzte elektromagnetische Strahlung eine Wellenlänge zwischen 400 und 670 nm für Chlorophyll-b und zwischen 350 und 700 nm für Chlorophyll-a hat.

4. Verfahren nach einem der vorhergehenden Ansprüche, wobei das aus dem Pflanzenmaterial entstehende Fluoreszenzsignal zwischen 600 und 800 nm gemessen wird.

5. Verfahren nach einem der vorhergehenden Ansprüche, wobei die elektromagnetische Strahlung, womit das Pflanzenmaterial bestrahlt wird, durch eine Lampe, einen Laser oder eine LED-Lampe generiert wird.

6. Verfahren nach einem der vorhergehenden Ansprüche, wobei die aus dem Pflanzenmaterial stammende Fluoreszenzstrahlung mit einer Photodiode, einem Photomultiplikator oder einer elektronischen Kamera gemessen wird.

**7.** Vorrichtung zum Bestimmen der Qualität von Pflanzenmaterial mit dem Verfahren nach einem der Ansprüche 1-6, umfassend erste Mittel zum Bestrahlen des Pflanzenmaterials mit elektromagnetischer Strahlung mit einer derartigen Wellenlänge daß zumindest ein Teil vom in dem Pflanzenmaterial vorhandenen Chlorophyll-b angeregt wird, erste Mittel zum Messen der aus dem Pflanzenmaterial stammenden Fluoreszenzstrahlung, zum Erhalten eines Fluoreszenzsignals (CF-b) das mit dem Chlorophyll-a-Übergang, als ein Ergebnis der Strahlungsabsorption durch Chlorophyll-b, verbunden ist, zweite Mittel zum Bestrahlen des Pflanzenmaterials mit elektromagnetischer Strahlung mit einer derartigen Wellenlänge daß zumindest ein Teil des im Pflanzenmaterial vorhandenen Chlorophyll-a angeregt wird, zweite Mittel zum Messen der aus dem Pflanzenmaterial entstehenden Fluoreszenzstrahlung zum Erhalten eines Fluoreszenzsignals (CF-a), das mit dem Chlorophyll-a-Übergang, als ein Ergebnis der Strahlungsabsorption durch Chlorophyll-a verbunden ist, und Mittel zum Verarbeiten der Fluoreszenzsignale.

**8.** Vorrichtung nach Anspruch 7, wobei die ersten und zweiten Mittel zum Bestrahlen des Pflanzenmaterials aus beziehungsweise einem ersten Laser, wovon die Intensität mit der ersten Frequenz moduliert ist und einem zweiten Laser wovon die Intensität mit einer zweiten Frequenz, die abweichend ist von der ersten Frequenz, moduliert ist, bestehen, wobei die ersten und zweiten Mittel zum Messen der Fluoreszenzsignale aus einem Detektor bestehen, der mit einem ersten Lock-in-Verstärker, der nur mit der ersten Frequenz modulierte Fluoreszenzsignale mißt, und mit einem zweiten Lock-In-Verstärker, der nur mit der zweiten Frequenz modulierte Fluoreszenzsignale mißt, verbunden ist, und die Mittel zum Verarbeiten der Fluoreszenzsignale aus einem Computer, der mit Software zum Verarbeiten der Signale des ersten und zweiten Lock-in-Verstärkers versehen ist, bestehen.

**9.** Verfahren zum Trennen von Pflanzenmaterial bestehend aus separaten Komponenten in verschiedenen Fraktionen, die jede eine verschiedene Qualität haben, wobei der charakteristische Parameter für jeden Komponent unter Benutzung des Verfahrens nach einem der Ansprüche 1-6 oder der Vorrichtung nach Anspruch 7 oder 8 bestimmt wird, und die Fraktionen von Komponenten mit dem charakteristischen Parameter in demselben vorabbestimmten Bereich gesammelt werden.

**10.** Verfahren nach Anspruch 9, wobei das Pflanzenmaterial aus Blattmaterial, Früchten, Beeren, Blumen, Blumenorganen, Wurzeln, Samen, Zwiebeln und Knollen von Pflanzen besteht.

**11.** Verfahren nach Anspruch 10, wobei jeder separate Komponent aus separaten Früchten, Beeren, Blumen, Blumenorganen, Wurzeln, Samen, Zwieblen und Knollen von Pflanzen besteht.

**12.** Vorrichtung zum Trennen von Pflanzenmaterial nach einem der Ansprüche 9-11, umfassend ein Zufuhrteil für das Pflanzenmaterial, ein Teil für die Bestrahlung des Pflanzenmaterials mit elektromagnetischer Strahlung, ein Teil für das Messen der aus dem Pflanzenmaterial stammenden Fluoreszenzstrahlung zum Erhalten eines Fluoreszenzsignals, und ein Trennungsteil das auf dem Basis des gemessenen Signals wirkt.

**Revendications**

**1.** Procédé pour déterminer la qualité d'une matière végétale en déterminant un paramètre caractéristique du système photosynthétique de la matière végétale, **caractérisé en ce que** ledit paramètre caractéristique est un paramètre contenant une information sur le transfert d'énergie de chlorophylle-b en chlorophylle-a et **en ce que** le procédé comprend les étapes suivantes :

a) irradier la matière végétale avec un rayonnement électromagnétique ayant une longueur d'onde telle qu'au moins une partie de la chlorophylle-b présente soit excitée et mesurer le rayonnement de fluorescence provenant de la matière végétale, lequel rayonnement de fluorescence est associé à la transition de chlorophylle-a pour obtenir un signal de fluorescence CF-b ;
b) irradier la matière végétale avec un rayonnement électromagnétique ayant une longueur d'onde telle qu'au moins une partie de la chlorophylle-a présente soit excitée et mesurer le rayonnement de fluorescence provenant de la matière végétale, lequel rayonnement de fluorescence est associé à la transition de chlorophylle-a pour obtenir un rayonnement de fluorescence CF-a ;
c) calculer le paramètre caractéristique de CF-b et CF-a.

**2.** Procédé selon la revendication 1, le paramètre contenant l'information relative au transfert d'énergie de la chlorophylle-b à la chlorophylle-a, $ET_{ba}$, étant calculé avec la formule :

$$ET_{ba} = CF\text{-}b/CF\text{-}a.$$

3. Procédé selon l'une quelconque des revendications précédentes, dans lequel le rayonnement électromagnétique utilisé pour irradier la matière végétale a une longueur d'onde entre 400 et 670 nm pour la chlorophylle-b et entre 350 et 700 nm pour la chlorophylle-a.

4. Procédé selon l'une quelconque des revendications précédentes, le signal de fluorescence provenant de la matière végétale étant mesuré entre 600 et 800 nm.

5. Procédé selon l'une quelconque des revendications précédentes, le rayonnement électromagnétique avec lequel la matière végétale est irradiée étant généré par une lampe, un laser de lampe à diode électroluminescente.

6. Procédé selon l'une quelconque des revendications précédentes, le rayonnement de fluorescence provenant de la matière végétale étant mesuré avec une photodiode, un photomultiplicateur ou une caméra électronique.

7. Dispositif pour déterminer la qualité d'une matière végétale en utilisant le procédé selon l'une quelconque des revendications 1 à 6, comprenant un premier moyen pour irradier la matière végétale avec un rayonnement électromagnétique ayant une longueur d'onde telle qu'au moins une partie de la chlorophylle-b présente dans la matière végétale soit excitée, un premier moyen pour mesurer le rayonnement de fluorescence provenant de la matière végétale pour obtenir un signal de fluorescence (CF-b) qui est associé à la transition de chlorophylle-a comme résultat de l'absorption du rayonnement par la chlorophylle-b, un deuxième moyen pour irradier la matière végétale avec un rayonnement électromagnétique ayant une longueur d'onde telle qu'au moins une partie de la chlorophylle-a présente dans la matière végétale soit excitée, un deuxième moyen pour mesurer le rayonnement de fluorescence provenant de la matière végétale pour obtenir un signal de fluorescence (CF-a) qui est associé à la transition de la chlorophylle-a comme résultat de l'absorption du rayonnement par la chlorophylle-a et un moyen pour traiter les signaux de fluorescence.

8. Dispositif selon la revendication 7, les premier et deuxième moyens pour irradier la matière végétale comprenant, respectivement, un premier laser dont l'intensité a été modulée avec une première fréquence et un deuxième laser dont l'intensité a été modulée avec une deuxième fréquence qui est différente de la première fréquence, les premier et deuxième moyens pour mesurer les signaux de fluorescence comprenant un détecteur relié à un premier amplificateur de verrouillage qui mesure seulement les signaux de fluorescence qui sont modulés avec la première fréquence et à un deuxième amplificateur de verrouillage qui mesure seulement les signaux de fluorescence qui sont modulés avec la deuxième fréquence et les moyens pour traiter les signaux de fluorescence comprenant un ordinateur prévu avec un logiciel pour traiter les signaux des premier et deuxième amplificateurs de verrouillage.

9. Procédé pour séparer une matière végétale comprenant des composants séparés selon diverses fractions ayant chacune une qualité différente, dans lequel le paramètre caractéristique est déterminé pour chaque composant en utilisant le procédé selon l'une quelconque des revendications 1 à 6 ou le dispositif selon la revendication 7 ou 8 et les fractions de composants ayant le paramètre caractéristique dans la même gamme prédéterminée sont recueillies.

10. Procédé selon la revendication 9, la matière végétale comprenant un matériau en feuille, des fruits, des baies, des fleurs, des organes de fleurs, des racines, des graines, des bulbes et des tubercules de plantes.

11. Procédé selon la revendication 10, chaque composant séparé comprenant des fruits séparés, des baies séparées, des fleurs séparées, des organes de fleurs séparés, des racines séparées, des graines séparées, des bulbes séparés et des tubercules de plantes séparés.

12. Dispositif pour séparer une matière végétale en utilisant le procédé selon l'une quelconque des revendications 9 à 11, comprenant une partie de fourniture pour la matière végétale, une partie pour l'irradiation de la matière végétale avec un rayonnement électromagnétique, une partie pour mesurer le rayonnement de fluorescence provenant de la matière végétale pour obtenir un signal de fluorescence et une partie de séparation qui travaille sur la base du signal mesuré.

FIG.1

FIG.2